# EUROPÄISCHE PATENTSCHRIFT

(11) **EP 1 934 568 B1**
(45) Veröffentlichungstag und Bekanntmachung des Hinweises auf die Patenterteilung: **12.05.2010**
(21) Anmeldenummer: 06792408.4
(22) Anmeldetag: 09.10.2006
(51) Int. Cl.: G01K 1/14, A47J 37/01, A47J 27/62

(54) **DOKUMENTATIONSSYSTEM FÜR DIE GASTRONOMIE**
DOCUMENTATION SYSTEM FOR THE CATERING TRADE
SYSTEME DE DOCUMENTATION DESTINE AU DOMAINE DE LA GASTRONOMIE

(30) Priorität: 10.10.2005 DE 202005015851 U
(43) Veröffentlichungstag der Anmeldung: 25.06.2008
(73) Patentinhaber: Eisfink Max Maier GmbH & Co. KG, 71636 LUDWIGSBURG (DE)
(72) Erfinder: MAIER, Max, 71636 Ludwigsburg (DE)
(74) Vertreter: Menges, Rolf
(86) Internationale Anmeldenummer: PCT/EP2006/009744
(87) Internationale Veröffentlichungsnummer: WO 2007/042248

(56) Entgegenhaltungen:
- EP-A- 0 511 807
- WO-A2-02/098174
- DE-A1- 10 253 567
- US-A1- 2003 036 885

## Beschreibung

Die Erfindung betrifft ein Dokumentationssystem gemäß dem unabhängigen Patentanspruch 1.

Der Rat der Europäischen Gemeinschaften hat am 14. Juni 1993 die Richtlinie 93/43/EWG über Lebensmittelhygiene erlassen. Diese soll gewährleisten, dass die gesunde Produktion von Speisen in umfassender Weise überprüft werden kann. Eine stetig wachsende Anzahl von Mahlzeiten wird heutzutage in Großküchen hergestellt und außerhalb der eigenen vier Wände eingenommen. Dadurch werden die Konsequenzen möglicher Fehler und Irrtümer umfangreicher. Art. 3 der Richtlinie verlangt daher, dass Lebensmittelunternehmen die für die Lebensmittelsicherheit kritischen Punkte im Prozessablauf feststellen und dafür Sorge tragen, dass angemessene Sicherheitsmaßnahmen festgelegt, durchgeführt, eingehalten und überprüft werden, und zwar nach dem sogenannten HACCP (Hazard Analysis and Critical Control Points)-System. Das erfordert die Feststellung und Durchführung wirksamer Prüf- und Überwachungsverfahren für die sogenannten kritischen Punkte. Einzelheiten hierzu sind beispielsweise in dem Aufsatz Schwachstelle Temperatur" von Prof. Dr. Lutz Bertling in der Zeitschrift gv-praxis, Heft 4/2003, S. 72 - 74, beschrieben. Danach müssen die Verantwortlichen in der Gemeinschaftsverpflegung sicherstellen, dass die Lebensmittel keiner nachteiligen Beeinflussung ausgesetzt sind. Hierbei spielen die Temperaturen eine entscheidende Rolle. Es handelt sich bei den einzuhaltenden Temperaturen stets um entscheidende "kritische Punkte" nach dem HACCP-System, die überprüft werden müssen. Obwohl eine automatische Registrierung der Temperatur für die Betriebsräume von Gaststätten und Einrichtungen zur Gemeinschaftsverpflegung noch nicht gesetzlich vorgeschrieben ist, empfiehlt Herr Prof. Bertling dringend, die Temperaturkontrollen bei der Lagerung (Keller, Kühl- und Tiefkühlräume), bei der Zwischenlagerung von Halbfertig- und Enderzeugnissen und bei der Abgabe an den Endverbraucher (Essensausgabe) zu dokumentieren. So ist beispielsweise sicher zu stellen und auch zu dokumentieren, dass Speisen die erwünschte Essenstemperatur von 65 Grad Celsius erreichen, dass beim Abkühlen heißer Lebensmittel der Bereich zwischen 65 Grad Celsius und 10 Grad Celsius innerhalb von drei Stunden durchschritten werden sollte (vorgeschrieben nach DIN 1058) und dass die Heißhaltung von Speisen auf drei Stunden begrenzt wird, weil bei der Heißhaltung Nachgareffekte entstehen und Austrocknungserscheinungen auftreten. Für die Temperaturmessung sollen dabei Registriergeräte eingesetzt werden, mit denen sich die Temperatur an der Produktoberfläche oder im Kernbereich (Produkttemperatur) oder die Temperatur der Umgebungsluft bei der Lagerung (Lagertemperatur) ermitteln und festhalten lässt. Diese Kriterien sind in der Praxis, insbesondere in der Gastronomie und in der Gemeinschaftsverpflegung, bislang schwierig nachprüfbar und dokumentierbar. Einzelheiten dazu finden sich in einem weiteren Aufsatz von Herrn Prof. Bertling, Cook & Chill, Temperaturanforderungen und -empfehlungen, Zeitschrift gv-praxis, Heft 4/1999, S. 60 - 66. Das Problem der mangelnden Temperaturkontrolle und -registrierung stellt sich insbesondere dann, wenn die kühl oder heiß zu haltenden Speisen nicht in geschlossenen Räumen gelagert sind oder gehandhabt werden, sondern sich auf dem Transport befinden.

Ein Dokumentationssystem der eingangs genannten Art ist in der Zeitschrift gv-praxis NGZ, Oktober 1997, die sich mit dem Thema "Die neue bundeseinheitliche Lebensmittel-Hygiene-Verordnung" und mit den Grundsätzen des HACCP-Systems befasst, dargestellt und beschrieben. Es handelt sich um ein sogenanntes HCPC-HOBART Communication Product Controllsystem der Firma Hobart GmbH, Offenburg, das als übergeordnetes Hygiene-Überwachungssystem in der innerbetrieblichen Produktion, zur Kontrolle extern gelieferter Lebensmittel, für ineinander greifende Arbeitsprozesse, zum Beispiel Garen/ Kühlen/ Regenerieren, oder in Geschirrspülanlagen eingesetzt wird. Es überwacht vorgegebene kritische Hygienepunkte und ermöglicht auch deren laufende Abfrage. Als Beispiele sind angegeben die Verwendung von Temperatur-Messeinheiten zum Beispiel in Transportboxen, in Rollcontainern oder Kühlwägen oder in Verbindung mit GN (Gastronorm)-Behältern. Als ein weiteres Beispiel ist der Einsatz in einem Heißluftdämpfer genannt, aus welchem Daten über eine Infrarot-Schnittstelle in einen Handcomputer transferiert werden, von dem u.a. Garzeiten und Kemtemperaturen angezeigt werden. Es handelt sich um ein Baukastensystem, bei dem die Temperatur-Messeinheit offenbar als gesondertes Gerät auf oder neben den Speisen in dem Transportbehälter anzuordnen und durch Kabel und Messsonden mit den Speisen zu verbinden ist. Außerdem benötigt das System eine Stromversorgung, die die Messung und Registrierung nachteilig beeinflussen kann, wenn wie in Transportboxen auf Batterien zurückgegriffen werden muss, die nur für eine begrenzte Zeit ausreichend Strom liefern. Wegen des erforderlichen Nachladens oder Auswechselns von verbrauchten Batterien kommt der Faktor Mensch ins Spiel mit allen damit verbundenen Unwägbarkeiten.

Das Dokument WO 02/098174 A2 zeigt die Verwendung eines RFID-Transponders in einem mittels Induktion erhitzbaren Körper, der Teil einer Lebensmitteltransporttasche sein kann. Es geht dabei darum, die Temperatur von Lebensmitteln während des Transports aufrecht zu erhalten. Der RFID-Transponder arbeitet dafür mit einem thermischen Schalter zusammen im Sinne einer Temperaturregelung. Der RFID-Transponder speichert zwar auch Information, es handelt sich dabei aber lediglich um Kundeninformation wie Kreditkartennummer, Zeit, Datum usw. Der RFID-Transponder und der thermische Schalter sind mit einer Induktionsheizvorrichtung verbunden und steuern diese. In diesem Dokument ist weder die Dokumentation für die Gastronomie noch das Registrieren der Temperatur von Speisen oder der Umgebung derselben angesprochen.

Das Dokument DE 102 53 567 A1 betrifft ein Lagerungsmittel, insbesondere eine Schale zur Lagerung von Lebensmitteln wie Fleisch, Fisch und Geflügel, die dauerhaft mit einem Kennzeichnungsmittel verbunden ist. Das Kennzeichnungsmittel kann zum einen dazu dienen, von einer Diebstahldetektionsvorrichtung erkannt zu werden, zum anderen kann es als Informationsträger, sogar als Transponder dienen, beispielsweise zur zusätzlichen Überwachung, ob die Kühlkette des Nahrungsmittels unterbrochen wurde. Die Schale kann mehrschichtig aufgebaut sein. Die Schalen bestehen vorzugsweise aus Kunststoff wie Schaumstoff. Sie sind demgemäß hauptsächlich zum Lagern von Nahrungsmitteln innerhalb einer Kühlkette einsetzbar. Da in solchen Schalen nicht gekocht werden kann, muss das darin enthaltene Nahrungsmittel zu diesem Zweck in andere Behälter umgefüllt werden. Das bekannte Lagerungsmittel in Kombination mit dem Kennzeichnungsmittel stellt somit kein Dokumentationssystem für die Gastronomie dar, da nicht dokumentiert werden kann, was mit dem Nahrungsmittel geschieht, sobald es die Schale verlassen hat. Es ist somit allenfalls der Kühlvorgang erfassbar und nachweisbar. Zweckmäßig sollte ein Dokumentationssystem aber den Zustand eines Nahrungsmittels vom Ausgangszustand an über die Vorbereitung und Zubereitung einer Speise einschließlich der Lagerung vor und nach der Zubereitung dokumentieren können, und diese Dokumentation sollte sicherheitshalber lückenlos sein.

Das Dokument EP-A- 0 511 807 befasst sich mit einer Vorrichtung zum Überwachen der Temperatur von Lebensmitteln bei der Lagerung. Die Vorrichtung umfasst eine Sensoreinheit und eine Leseeinheit. Die Sensoreinheit ist mit Kunststoff eingekapselt und hat typisch die Größe einer Kreditkarte. Solche Vorrichtungen können in Lebensmittelbehältern platziert werden, zum Beispiel in einem Fahrzeug, um das Lebensmittel zu begleiten und die Temperatur in dem Behälter in vorbestimmten Intervallen zu messen und aufzuzeichnen.

Aufgabe der Erfindung ist es, ein Dokumentationssystem für die Gastronomie zu schaffen, das mit weniger Aufwand und bei einfacherer Handhabbarkeit zuverlässigere Ergebnisse liefert.

Diese Aufgabe ist erfindungsgemäß durch ein Dokumentationssystem mit den im Patentanspruch 1 angegebenen Merkmalen gelöst.

Erfindungsgemäß weist der Transportbehälter einen in seiner Gesamtheit aus induktionsfähigem Mehrschichtmaterial bestehenden Behälter zur Aufnahme von Speisen auf oder besteht aus einem solchen Behälter und der Transportbehälter selbst ist von Haus aus mit einem RFID-Transponder als Messinstrument ausgerüstet, der üblicherweise keine eigene Stromversorgung benötigt, sondern seine Energie einem äußeren elektromagnetischen Feld entnimmt. Der Aufbau des erfindungsgemäßen Transportbehälters macht den Einsatz von Zwischenbehältern wie in dem oben genannten Stand der Technik überflüssig und erlaubt so eine lückenlose Dokumentation, weil das Nahrungsmittel bis zum Verzehr immer in demselben Behälter verbleiben kann. Darüber hinaus braucht sich der Produzent von Speisen auch mit der Messung und Registrierung von Temperaturen nicht zu befassen und hat so auch keinen Einfluss darauf. Diese Aufgabe nimmt ihm der RFID-Transponder ab, der zu beliebigen Zeiten nach Bedarf mittels eines Scanners abgefragt werden kann. Erfindungsgemäß wird so ein Dokumentationssystem für die Gastronomie bereitgestellt, mit dem sich vor allem die Historie von Speisen lückenlos verfolgen lässt. Das erfindungsgemäße Dokumentationssystem ermöglicht nämlich, die Temperaturen zu kontrollieren und zu registrieren, denen Speisen von der Zubereitung bis zum Verzehr ausgesetzt worden sind, und weitere Parameter wie Temperaturgradienten bei der Lagerund oder Zubereitung, ohne dass es dabei der Mithilfe des Benutzers des Transportbehälters bedarf, der die Speisen produziert, lagert oder transportiert. Da bei dem Dokumentationssystem nach der Erfindung der Transportbehälter ein Behälter zur Aufnahme von Speisen ist, lässt sich ohne Mithilfe des Benutzers dieses Behälters die Geschichte der Speisen in dem Behälter dokumentieren.

Der Einsatz von RFID-Transpondern in der Lebensmittelindustrie bei der Speisenverteilung ist an sich bereits bekannt. RFID-Transponder sind winzige Funk-Chips, die Warenwege lückenlos nachvollziehbar machen. Die dabei zur Anwendung kommende Radiofrequenz-Technologie basiert auf einem Lesegerät (etwa einem mobilen Scanner) und dem Transponder, der aus einem Chip und einer Antenne besteht. Die Antenne übernimmt über externe Anregung die Energieversorgung des Chips und sorgt dafür, dass Informationen des Chips berührungslos und aus einigen Metern Entfernung aus dem Chip abgelesen oder auf den Chip geschrieben werden können. Bei der Speisenverteilung lässt sich anhand des RFID-Transponders und der darin zumindest enthaltenen Identifikationsinformation z.B. die Herkunft einer Speise ermitteln. Es ist nicht bekannt, in der Gastronomie oder Gemeinschaftsverpflegung RFID Transponder zum Verfolgen der Historie von Speisen einzusetzen.

Bei dem Dokumentationssystem nach der Erfindung ist im Übrigen der RFID-Transponder ein integraler Bestandteil des Transportbehälters, also unlösbar mit diesem verbunden. Es lassen sich daher Temperaturen von Speisen oder in der Umgebung von Speisen in dem Transportbehälter unbemerkt von dem Benutzer dokumentieren, was geringsten Aufwand, einfachste Handhabung und größte Zuverlässigkeit bedeutet. Es ist nämlich kein Messinstrument vorhanden, das über Kabel und Messsonden mit den Speisen verbunden werden müsste. Es ist auch keine Batterie vorhanden, deren Ladezustand ständig überwacht werden müsste. Mit dem Transponder, der bei der Herstellung des Transportbehälters, sei es ein Behälter zur Aufnahme von Speisen oder ein verschließbarer Isolierbehälter zur Aufnahme von solchen Behältern zur Aufnahme von Speisen, im Werk mit diesem unlösbar verbunden wird, lässt sich der Weg vom Produzenten des Inhalts des Transportbehälters über die gesamte Lebensdauer des Transportbehälters in der Gastronomie bis schließlich zur Recyclinganlage verfolgen. Das ist entscheidend, wenn die Geschichte des Behälterinhalts zuverlässig festgehalten werden soll. Es lässt sich dann später z.B. leicht feststellen, ob gekochte Speisen bei dem Garvorgang überhitzt worden sind, ob tiefgekühlte Speisen unzulässigerweise zwischendurch aufgetaut sind, usw., und das ein Transportbehälterleben lang. Zweckmäßig wird der Speicher in dem RFID-Transponder immer dann wieder auf null oder einen Ausgangszustand zurückgestellt, wenn neue Speisen in den Transportbehälter gefüllt oder geladen werden. Dafür kann in jedem Gastronomie- oder Speisentransportbetrieb eine Transponderlese- oder -initialisierungs-station bereitgestellt werden, die jeder neu gefüllte oder geladene Transportbehälter durchlaufen muss, bevor er eingelagert wird oder den Betrieb verlässt.

Vorteilhafte Ausgestaltungen der Erfindung bilden die Gegenstände der Unteransprüche.

Wenn in einer Ausgestaltung des Dokumentationssystems nach der Erfindung der Transportbehälter ein verschließbarer Isolierbehälter ist, der zur Aufnahme von in ihrer Gesamtheit aus induktionsfähigem Mehrschichtmaterial bestehenden Behältern zur Aufnahme von Speisen ausgebildet ist, lässt sich ohne die Mithilfe des Benutzers des Transportbehälters die Temperatur in dessen Innenraum dokumentieren. Wenn sich in dem Isolierbehälter Behälter befinden, die selbst mit einem RFID-Transponder ausgerüstet sind, lässt sich sowohl die Temperatur der Speisen (Produkttemperatur) als auch die Temperatur in der Umgebung derselben (Lagertemperatur) dokumentieren. Geeignete Isolierbehälter sind z.B. aus dem Katalog Nr. 36 59 04 01/3 05 05 der Rieber GmbH & Co. KG, 72770 Reutlingen, "Die Thermoporte der 2-Steme-Klasse und 3-Sterne-Klasse - Universelle Speisentransport-Systeme" bekannt. Es handelt sich um gastronormgerechte Transportbehälter aus Kunststoff oder rostfreiem Stahl für kleine bis große Speisenmengen.

Wenn in einer weiteren Ausgestaltung des Dokumentationssystems nach der Erfindung der RFID-Transponder eine Antenne und einen Speicherchip umfasst, ist dieser selbst für die gewünschten Aufzeichnungszwecke entsprechend ausgerüstet. Es braucht lediglich ein Speicherchip mit für die Lebensdauer des Transportbehälters ausreichender Speicherkapazität bereitgestellt zu werden.

Wenn in einer weiteren Ausgestaltung des Dokumentationssystems nach der Erfindung der RFID-Transponder zur Speicherung von Temperaturinformation mit einem Temperaturfühler versehen oder als ein Temperaturfühler ausgebildet ist, kann jederzeit die Temperatureinwirkung auf den Behälterinhalt gemessen und gespeichert werden.

Ausführungsbeispiele der Erfindung werden im Folgenden unter Bezugnahme auf die Zeichnung näher beschrieben. Es zeigt
- Fig. 1: eine Querschnittansicht eines GN-Behälters mit einem in dessen Boden integrierten RFID-Transponder und
- Fig. 2: in perspektivischer Darstellung einen verschließbaren Isolierbehälter, der zur Aufnahme von GN-Behältern ausgebildet ist.

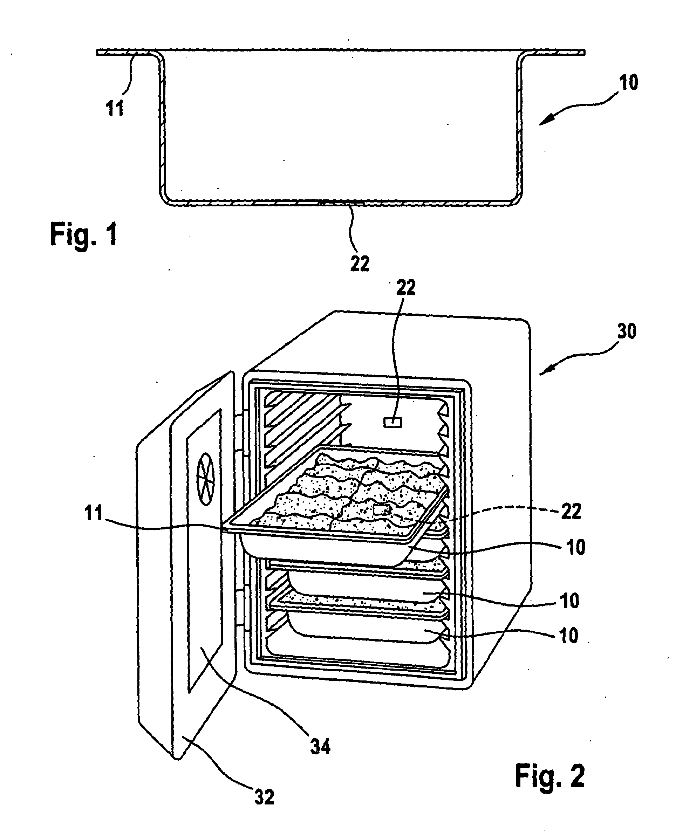

Fig. 1 zeigt im Querschnitt einen Transportbehälter für Speisen, der als ein insgesamt mit 10 bezeichneter GN (Gastronorm)-Behälter ausgebildet ist. Der Transportbehälter ist mit einem Messinstrument zum Messen und Registrieren der Temperatur der Speisen versehen. Erfindungsgemäß ist bei dem in Fig. 1 gezeigten ebenso wie bei dem in Fig. 2 gezeigten Transportbehälter das Messinstrument ein RFID-Transponder 22. In Fig. 1 ist der RFID-Transponder 22 fest in den Boden des GN-Behälters 10 eingelassen und somit ein integraler Bestandteil des GN-Behälters. Der GN-Behälter 10 und der in diesen integrierte RFID-Transponder 22 bilden gemeinsam ein Ausführungsbeispiel eines erfindungsgemäßen Dokumentationssystems für die Gastronomie.

Fig. 2 zeigt in perspektivischer Darstellung ein weiteres Ausführungsbeispiel des Dokumentationssystems nach der Erfindung, bei dem der Transportbehälter für Speisen als ein verschließbarer Isolierbehälter zur Aufnahme von GN-Behältern 10 ausgebildet und insgesamt mit 30 bezeichnet ist. Der in Fig. 1 dargestellte GN-Behälter 10 besteht in seiner Gesamtheit aus einem induktionsfähigen Mehrschichtmaterial. Ein Material dieser Art zeigt zum Beispiel die US-A-5 952 112. Der Isolierbehälter 30 besteht üblicherweise aus rostfreiem Stahl oder Kunststoff. Seine Wände sind mit Isolierstoff ausgeschäumt.

Der Isolierbehälter 30 ist durch eine Tür 32 verschließbar. In der Tür ist ein Heiz- oder Kühlelement 34 untergebracht. Der übrige Innenraum der Tür ist ebenfalls mit Isolierstoff aufgeschäumt Im Innenraum des Isolierbehälters 30 sind an den beiden einander gegenüberliegenden Seitenwänden Auflagen wie für die Kuchenbleche in einem Backofen vorgesehen, so dass mehrere GN-Behälter 10 übereinander in den Isolierbehälter 30 eingeschoben werden können. Weitere Einzelheiten über den Aufbau eines solchen Isolierbehälters finden sich in dem eingangs erwähnten Katalog der Firma Rieber GmbH & Co. KG. Weiter ist im Innenraum des Isolierbehälters 30 in dessen Rückwand wenigstens ein RFID-Transponder 22 als Messinstrument zum Messen und Registrieren der Temperatur der Umgebung der in den GN-Behältern 10 enthaltenen Speisen angebracht. In dem Isolierbehälter 30 können mehrere Temperaturzonen übereinander ausgebildet werden, indem zwischen den GN-Behältern 10 Isoraumteiler (nicht dargestellt) eingeschoben werden. Wenn der Isolierbehälter 30 als ein Zweizonenbehälter (heiß + kalt) ausgebildet werden soll, ist ein Isoraumteiler erforderlich. In diesem Fall sind dann wenigstens zwei RFID-Transponder 22 an der Rückwand des Isolierbehälters 30 als Messinstrumente zum Messen und Registrieren der Temperatur in der Umgebung der Speisen (Lagertemperatur) in den GN-Behältern 10 erforderlich. Wenn die in den Isolierbehälter 30 eingeschobenen GN-Behälter 10 selbst mit RFID-Transpondern 22 ausgerüstet sind, kann zusätzlich zur Lagertemperatur auch die Temperatur der Speisen selbst (Produkttemperatur) registriert werden. Die Messinstrumente werden in dem Ausführungsbeispiel nach Fig. 2 fest in die Rückwand innen in dem Isolierbehälter 30 eingelassen oder innen auf der Rückwand unlösbar befestigt. Die Anforderungen nach HACCP beim Warm- oder Kalttransport von Speisen werden mit dem Isolierbehälter 30 noch übertroffen, zum Beispiel mit einem tolerierbaren Wärmeverlust von weniger als 1,5 °C/Stunde.

Der RFID-Transponder 22 ist selbst als Temperaturfühler ausgebildet oder ihm ist ein Temperaturfühler zugeordnet. Der Aufbau eines solchen RFID-Transponders 22 ist an sich bekannt und braucht hier nicht näher erläutert zu werden. Eingangs ist bereits erwähnt worden, dass ein solcher RFID-Transponder 22 aus einer Antenne und einem Chip, vorzugsweise einem Speicherchip, besteht. Über die Antenne sendet der RFID-Transponder 22 bei Abfrage die Identifikation des Transportbehälters, mit welchem der RFID-Transponder verbunden ist, und eine aktuelle oder eine gespeicherte Temperaturinformation. Zusätzlich oder stattdessen kann er über die Antenne andere Daten des Transportbehälters oder des Inhalts desselben empfangen, speichern und bei Abfrage senden.

Der Transponder ist in Fig. 1 zwar in den Boden des GN-Behälters 10 und in Fig. 2 in die Rückwand des Isolierbehälters 30 auf dessen Innenseite integriert dargestellt, er könnte stattdessen oder zusätzlich aber auch an anderer Stelle in den Transportbehälter integriert oder an beliebiger Stelle auf dessen Oberfläche im Innenraum des Transportbehälters befestigt sein. In dem Ausführungsbeispiel nach Fig. 1 kann der RFID-Transponder 10 beispielsweise auch in den Rand 11 des GN-Behälters integriert sein.

Der GN-Behälter 10 nach Fig. 1 ermöglicht mit dem zugeordneten RFID-Transponder 22 auch ein temperaturabhängiges Kochen oder Tiefkühlen von Speisen statt, wie bislang üblich, lediglich das Warmhalten oder Kühlen von Speisen. In dem RFID-Transponder 22 kann die Historie der Behandlung des Inhalts des Transportbehälters lückenlos aufgezeichnet werden, so dass diese bei Bedarf wieder abgefragt werden kann. Die Speicherkapazität des Chips des RFID-Transponders 22 wird dafür entsprechend gewählt.

Ein Standard-GN-Behälter und ein Standard-Isolierbehälter, die beide für die Aufbewahrung bzw. den Transport von Speisen ausgebildet sind, werden durch den Einsatz des RFID-Transponders 22 jeweils zu einem intelligenten Transportbehälter, der die Möglichkeit bietet, die Geschichte des Behälterinhalts lückenlos, fälschungssicher und dauerhaft zu dokumentieren.

## Patentansprüche

1. Dokumentationssystem für die Gastronomie, mit einem Transportbehälter für Speisen, der mit mindestens einem Messinstrument zum Messen und Registrieren der Temperatur der Speisen oder der Umgebung derselben versehen ist, wobei das Messinstrument einen RFID-Transponder (22) umfasst, der ein integraler Bestandteil des Transportbehälters (10, 30) ist, **dadurch gekennzeichnet, dass** der Transportbehälter (10, 30) einen in seiner Gesamtheit aus induktionsfähigem Mehrschichtmaterial bestehenden Behälter (10) zur Aufnahme von Speisen aufweist oder aus einem solchen Behälter besteht.

2. Dokumentationssystem nach Anspruch 1, **dadurch gekennzeichnet, dass** der Transportbehälter ein verschließbarer Isolierbehälter (30) ist, der zur Aufnahme von in ihrer Gesamtheit aus induktionsfähigem Mehrschichtmaterial bestehenden Behältern (10) zur Aufnahme von Speisen ausgebildet ist.

3. Dokumentationssystem nach Anspruch 1 oder 2, **dadurch gekennzeichnet, dass** der RFID-Transponder (22) eine Antenne und einen Speicherchip umfasst.

4. Dokumentationssystem nach Anspruch 3 **dadurch gekennzeichnet, dass** der RFID-Transponder (22) zur Speicherung von Temperaturinformation mit einem Temperaturfühler versehen oder als ein Temperaturfühler ausgebildet ist.

## Claims

1. A documentation system for the catering trade, comprising a transport container for food, provided with at least one measuring instrument for measuring and recording the temperature of the food or the environment thereof, the measuring instrument comprising an RFID transponder (22) which is an integral part of the transport container (10, 30), **characterized in that** the transport container (10, 30) comprises a container (10) which, as a whole, consists of an inductive multi-layer material for receiving food, or is composed of such a container.

2. The documentation system according to claim 1, **characterised in that** the transport container is a closable insulated container (30) constructed to receive containers (10) for receiving food which, as a whole, consist of an inductive multi-layer material.

3. The documentation system according to claim 1 or 2, **characterised in that** the RFID transponder (22) comprises an antenna and a memory chip.

4. The documentation system according to claim 3, **characterised in that** the RFID transponder (22) for storing temperature information is provided with a temperature sensor or is constructed as a temperature sensor.

## Revendications

1. Système de documentation destiné au domaine de la gastronomie, comportant un bac de transport pour aliments, qui est muni d'au moins un instrument de mesure pour mesurer et enregistrer la température des aliments ou de l'environnement de ceux-ci, ledit instrument de mesure comportant un transpondeur RFID (22), qui est une partie intégrante du bac de transport (10, 30), **caractérisé en ce que** le bac de transport (10, 30) comporte un bac (10) destiné à recevoir des aliments, réalisé dans son ensemble dans un matériau multicouche inductif ou est formé par un tel bac.

2. Système de documentation selon la revendication 1, **caractérisé en ce que** le bac de transport est un bac isolant (30) propre à être fermé, qui est conçu pour recevoir des bacs (10) destinés à recevoir les aliments, réalisés dans leur ensemble dans un matériau multicouche inductif.

3. Système de documentation selon la revendication 1 ou 2, **caractérisé en ce que** le transpondeur RFID (22) comporte une antenne et une puce formant mémoire.

4. Système de documentation selon la revendication 3, **caractérisé en ce que** le transpondeur RFID (22), en vue du stockage d'informations sur la température, est muni d'un capteur de température ou est réalisé sous la forme d'un capteur de température.
